Europäisches Patentamt

(19) European Patent Office

Office européen des brevets

(11) Publication number: **0 019 854**
**B1**

(12) **EUROPEAN PATENT SPECIFICATION**

(45) Date of publication of patent specification: **20.07.83**

(21) Application number: **80102845.7**

(22) Date of filing: **22.05.80**

(51) Int. Cl.³: **F 17 C 13/04,**
**G 05 D 16/06, F 16 F 1/12**

(54) **Device for maintaining a preset gauging condition in pressure reducers, particularly for liquid gas.**

(30) Priority: **31.05.79 IT 517379**

(43) Date of publication of application:
**10.12.80 Bulletin 80/25**

(45) Publication of the grant of the patent:
**20.07.83 Bulletin 83/29**

(84) Designated Contracting States:
**DE FR GB NL SE**

(56) References cited:
**DE - B - 1 199 061**
**DE - C - 923 757**
**FR - A - 2 250 940**

**J. VAN NOORD et al.: "HANDBOEK VAN DE
FINJMECHANISCHE TECHNIEK" 1st edition,
part 8: "Produkten (mechanisch)" 1969, Philips
Technische Bibliotheek, Kluwer DEVENTER (NL)
page 59**

(73) Proprietor: **OMECA S.p.A.**
**Via Cavour, 32**
**I-25010, Ponte S. Marco-Calcinato (Brescia) (IT)**

(72) Inventor: **Crottogini, Pierangele**
**Via Stazione, 101**
**IT-25010 Ponte S.Marco Brescia (IT)**
Inventor: **Schlick, Bernard**
**Vecchia Filanda Via xx Settembre,63**
**IT-25011 Calcinato Brescia (IT)**

(74) Representative: **Modiano, Guido et al,**
**MODIANO & ASSOCIATI S.A.S. Via Meravigli, 16**
**I-20123 Milan (IT)**

Courier Press, Leamington Spa, England.

Device for maintaining a preset gauging condition in pressure reducers, particularly for
liquid gas

This invention relates to a device for maintaining a preset gauging condition in pressure reducers, particularly for liquid gas.

As is known, liquid gas pressure reducers comprise in general a body with a cavity closed at the top by an elastic membrane which is loaded by a spring, the other end of the spring acting against a cover rigidly associated with said body.

The spring is generally coupled by means of a first cap or washer arranged to rest on the membrane and of a second cap or washer acting against the inner bottom of the cited cover.

Pressure reducers are further provided with internally located calibrating or gauging means for said spring, the spring being required to apply a preset force which has to be accurately adjusted.

The calibrating means are necessary because, as mentioned above, the force applied by the spring must be adjusted to a high degree of precision, and any variations in the inherent characteristics of the spring, tolerances in the materials employed, etc., could result in unacceptable changes.

To this aim, during the manufacture of the regulator, an accurate spring calibration step is carried out, which calibration has to be effected once for all, and no more changed.

Currently, the calibration means generally comprise an adjustment screw located on the reducer cover, which applies a thrust force to the top washer, thereby imparting to the spring the correct height and compression, (cf. FR—A—2250940).

Therefore, it is necessary that this adjustment be carried out with great accuracy by a skilled operator, whilst measures must be taken to prevent the completed calibration from undergoing changes.

Thus, the construction of the reducers just described involves of necessity the provision of threaded seats, slotted head screws, as well as the use of dished metal washers or caps adapted for receiving on one face thereof the end turn or coil of the spring and on the other face a concave seat for the insertion therein of the tip or point of the screw used for adjusting the spring.

It will be appreciated, accordingly, that the conventional calibrating means are quite expensive to manufacture and not always reliable and accurate in operation, and do not allow automatic gauging or calibrating.

This invention sets out to eliminate the problems encountered in the past by providing a pressure reducer with a device which affords the possibility of gauging the spring in an extremely quick and simple automatic manner, and such that the completed gauging cannot be inadvertently changed afterwards.

Within that general aim, it is possible to arrange that the device of this invention includes a reduced number of component parts and is simpler to manufacture, it requiring no threaded seats in its cover, which seats would obviously have to be made after the cover has been cast.

It is further possible to arrange that the device according to the invention affords greatly reduced production times, while ensuring a final product of high quality and accuracy.

According to the present invention, there is provided a device for maintaining a preset gauging condition in pressure reducers, particularly for liquid gas, of the type comprising a body defining a chamber closed at the top by an elastic membrane whereon a spring is active, the other end of said spring acting against a cover associated with said body, characterized in that said device comprises on the face of said cover facing said membrane at least one seat receiving a calibration element for said spring, said calibration element being force fitted in said seat, in a preset position.

Further features and advantages will be more clearly understood from the description of a preferred, but not limitative, embodiment of a pressure reducer calibrating device particularly for liquid gas, as illustrated by way of example only in the accompanying drawing, where:

Figure 1 is a sectional view, taken along the line I—I of Figure 2, of a pressure reducer incorporating the calibrating device according to this invention;

Figure 2 is a schematical representation of the cover inner face;

Figure 3 is a perspective view of one of the receiving seats;

Figure 4 shows a further embodiment of the device having but one receiving seat;

Figure 5 is a plan view of the spring used in the embodiment of Figure 4; and

Figure 6 is a schematical plan view of another embodiment of the detent elements.

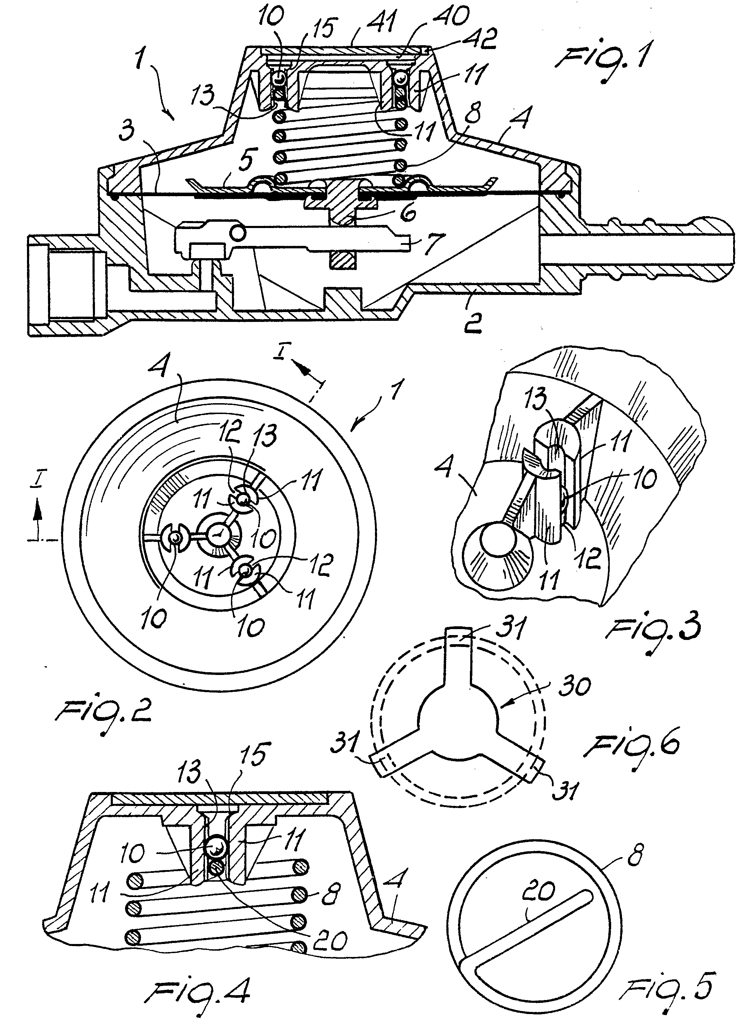

With reference to the cited figures, and more particularly to Figures 1 to 3, a gas pressure reducer is shown which is designated generally with the reference numeral 1. The reducer 1 includes a body 2, of a type known *per se* and accordingly not further discussed herein, to the top whereof there is associated an elastic membrane 3 which is retained between the body 2 itself and a cover 4 associated with the body 2.

On the top face of the membrane 3, there is provided a washer or cap 5, whereto a rod 6 is rigidly connected which is associated with the rocker arm 7 of the reducer. An elastic bias spring 8 acts on the top face of the washer 5 and engages at the top calibrating means defined on the cover 4.

The calibrating means, which constitute a peculiar feature of this invention, comprise one or more calibration elements which engage with the top end of the spring 8 and can be locked by forced fit in a preset position of a receiving seat defined on the bottom of the cover itself.

More specifically, said calibration elements comprise a plurality of small balls 10 (three in the example of Figure 2) which can be forced into receiving seats formed by a pair of downwardly extending lugs 11 which are arranged to face each other and spaced apart to define a slit 12.

The lugs or projections 11 define on their surfaces facing each other a channel 13 in the shape of an arc of a circumference.

Moreover, said channel 13 is put in communication with the outer portion of the cover through a lead-in widening 15; in said channel 13 there are forced fit inserted, by material deformation of the lugs 11, the cited small balls 10, which after being positioned at a position determined in accordance with the calibration to be imparted to the spring, are held securely in that position.

In seated engagement with the balls 10 is the top end of the spring 8, which is practically received in the slit 12 defined between the lugs 11. The pairs of lugs 11 are, in the embodiment shown in Figures 1 to 3, arranged circumferentially such that their related slits 12 engage circumferentially, at equidistant points, the top end of the spring.

According to a further embodiment, closely related in concept to the previously described one, a single pair of lugs are provided, which are located centrally and engage with a radial portion 20 of the spring 8 to perform a similar function to the one described hereinabove.

Figure 6 illustrates a variation of the calibration element, which instead of balls 10 comprises here a cross-like or spider body 30 which can be force fitted to a preset height into a corresponding seat defined on the cover 4 and has circumferentially arranged extensions 31 adapted for engaging the top end of the spring. In this embodiment the slit 12 and the corresponding channel 13 may have a cross-sectional shape adapted to that of the extensions 31 of the spider body 30.

The top outer portion of the cover has a depression or dished portion 40 wherein the lead-in widenings 15 can be housed for the insertion of the balls, said depression being closeable by a plate 41 which serves in practice as a manufacturer's seal. Advantageously, a vent 42 is provided for venting air from within such as not to impair the normal oscillation of the membrane.

In actual practice, once the required calibration value has been set, it will be sufficient to insert to a predetermined depth the balls 10, or similar calibration elements, by pressing them into the channel, utilizing the fact that the balls are provided with a diameter dimension slightly exceeding the size of the channel 13, thereby a partial deformation of the material is induced along with a slight spreading apart of the lugs 11 which keep locked in their preset positions the various balls 10, thus achieving the desired calibration value.

It has been found that the preset position of the balls is maintained stably even under severe operational and thermal conditions. It is believed that this is also due to the fact that the force fit which is carried out with a continuously operation machine brings about an instantaneous welding process between the surfaces of the balls and the contiguous surfaces of the channel 13 wherein the balls are force fitted.

It will be appreciated from the foregoing that the invention achieves its objects, and in particular that the cover can be completed during the striking step thereof, such that no subsequent processing is required, as is instead the case with conventional designs, e.g. to provide the threaded seats for engagement with the adjusting screw.

Furthermore, the balls 10 can be pressed in using fully automated equipment.

Another advantage of the invention is that the devices are closed by means of the plate 41 which serves as a sealing member to prevent subsequent manipulation which could alter the preset calibration values.

The invention as described is susceptible to many modifications and variations within the scope of this same inventive concept.

Moreover, all of the details may be replaced with other technically equivalent elements.

## Claims

1. A device for maintaining a preset gauging condition in pressure reducers, particularly for liquid gas, of the type comprising a body (2) defining a chamber closed at the top by an elastic membrane (3) whereon a spring (8) is active, the other end of said spring (8) acting against a cover (4) associated with said body (2), characterized in that said device comprises on the face of said cover facing said membrane at least one seat receiving a calibration element (10, 30) for said spring (8), said calibration element being force fitted in said seat, in a preset position.

2. A device according to Claim 1, characterized in that said receiving seat comprises a pair of lugs or projections (11) arranged to face each other and spaced apart to define a slit (12) therebetween, on the facing surfaces of said lugs or projections (11) there being defined a channel (13) extending in cross-section at least partly over an arc of a circumference and opening to the outside of said cover (4), in said channel (13) there being insertable said calibration element comprising a ball (10).

3. A device according to the preceding Claims, characterized in that said channel (13) has, on the portion thereof facing outside, a flare (15) adapted to serve as a lead-in element for the introduction of said ball (10) into said channel (13).

4. A device according to one or more of the preceding Claims, characterized in that said ball (10) has a larger diameter than the diameter of said channel (13).

5. A device according to one or more of the preceding Claims, characterized in that said spring (8) is inserted with the top end thereof into said slit (12) and is seated on said ball (10).

6. A device according to one or more of the preceding Claims, characterized in that it comprises one of said receiving seats (11) located at a central position on the inner face of said cover (4), in said centrally located receiving seat there engaging a radial portion (20) defined at the top end of said spring (8).

7. A device according to one or more of the preceding Claims 1 to 5, characterized in that it comprises a plurality of said lug pairs (11) arranged to face each other, positioned over a circumferential region and being adapted to engage at equidistant points the top end of said spring (8).

8. A device according to one or more of the preceding Claims, characterized in that said cover (4) defines on the outer face thereof a depression (40) at the top whereto said channels (13) open, said depression (40) being closeable by means of a closure plate (41) adapted to serve as a manufacturer's seal, an air vent (42) being also provided.

## Patentansprüche

1. Vorrichtung zur Aufrechterhaltung voreingestellter Bedingungen in Druckreduzierern, insbesondere für Flüssiggas, mit einem Körper (2), der eine Kammer begrenzt, die oben durch eine elastische Membrane (3) geschlossen ist, auf welche eine Feder (8) wirkt, deren anderes Ende auf einen dem Körper (2) zugeordneten Deckel (4) wirkt, dadurch gekennzeichnet, daß die Vorrichtung auf der Seite des Deckels, die der Membrane gegenüberliegt, wenigstens einen Sitz für die Aufnahme eines Kalibrierelements (10, 30) für die Feder (8), welches in den gennannten Sitz in einer voreingestellten Position eingepreßt ist.

2. Vorrichtung nach Anspruch 1, dadurch gekennzeichnet, daß der Aufnahmesitz aus einem Paar von Ansätzen oder Vorsprüngen (11) besteht, die einander gegenüberliegend und im Abstand zueinander unter Bildung eines Schlitzes (12) zwischen sich angeordnet sind, wobei auf den gegenüberliegenden Flächen der Ansätze oder Vorsprünge (11) ein Kanal (13) gebildet ist, der sich im Querschnitt wenigstens teilweise über einen Umkreisbogen erstreckt und sich zur Außenseite des Deckels (4) öffnet, wobei in den gennannten Kanal (13) das aus einer Kugel (10) bestehende gennannte Kalibrierelement einsetzbar ist.

3. Vorrichtung nach den vorhergehenden Ansprüchen, dadurch gekennzeichnet, daß der genannte Kanal (13) im Bereich seines der Außenseite gegenüberliegenden Abschnittes eine Ausweitung (15) besitzt, die als Einladelement für die Einführung der genannten Kugel (10) in den Kanal (13) dient.

4. Vorrichtung nach einem der vorhergehenden Ansprüche, dadurch gekennzeichnet, daß die genannte Kugel (10) einen größeren Durchmesser besitzt als der Durchmesser des genannten Kanals (13).

5. Vorrichtung nach einem der vorhergehenden Ansprüche, dadurch gekennzeichnet, daß die Feder (8) mit ihrem oberen Ende in den Schlitz (12) eingesetzt ist und auf der Kugel (10) aufsitzt.

6. Vorrichtung nach einem der vorhergehenden Ansprüche, dadurch gekennzeichnet, daß einer der Aufnahmesitze (11) in einer mittleren Position auf der Innerfläche des Deckels (4) angeordnet ist, wobei in den mittig angeordneten Aufnahmesitz ein radialer Teil (20) eingreift, der am Oberende der Feder (8) ausgebildet ist.

7. Vorrichtung nach einem der Ansprüche 1 bis 5, dadurch gekennzeichnet, dß sie eine Vielzahl der geannten Ansatzpaare (11) aufweist, die einander gegenüberliegend angeordnet über einem Umkreisbereich verteilt sind und mit dem Oberende der Feder (8) an in gleichem Abstand zueinander liegenden Stellen im Eingriff stehen.

8. Vorrichtung nach einem der vorhergehenden Ansprüche, dadurch gekennzeichnet, daß der Deckel (4) an seiner Außenfläche eine Vertiefung (40) aufweist, an deren Oberseite sich die genannten Kanäle (13) öffnen, wobei die Vertiefung (40) mittels einer Verschlußplatte (41), die als Erzeugersiegel ausgebildet ist, verschließbar ist und weiteres eine Entlüftung (42) vorgesehen ist.

## Revendications

1. Dispositif pour maintenir un étalonnage préréglé dans des réducteurs de pression, notamment pour des gaz liquides, du type comprenant un corps (2) délimitant une chambre dont le haut est fermé par une membrane élastique (3) sur laquelle agit un ressort (8), l'autre extrémité de ce ressort (8) s'appuyant contre un couvercle (4) associé au corps (2) caractérisé en ce qu'il comporte sur la face du couvercle regardant la membrane au moins un siège recevant un élément d'étalonnage (10, 30) pour ce ressort (8), cet élément d'étalonnage étant logé de force dans le siège dans une position préréglée.

2. Dispositif selon la revendication 1, caractérisé en ce que ce siège comporte deux bossages ou saillies (11) disposés en vis-à-vis et séparés pour définir entre eux une fente (12) sur les surfaces en vis-à-vis des bossages ou saillies (11), définissant ainsi un passage (13) s'étendant en section transversale au moins partiellement sur un arc de cercle et s'ouvrant vers l'extérieur du couvercle (4), l'élément d'étalonnage constitué par une bille (10) pouvant être introduit dans ce passage (13).

3. Dispositif selon l'une quelconque des revendications précédentes, caractérisé en ce que ce passage (13) présente, sur sa portion regardant vers l'extérieur, une surface épanouie (15) adaptée pour servir d'élément de guidage pour l'introduction de la bille (10) dans le passage (13).

4. Dispositif selon l'une quelconque des revendications précédentes, caractérisé en ce que cette bille (10) a un diamètre supérieur au diamètre du passage (13).

5. Dispositif selon l'une quelconque des revendications précédentes, caractérisé en ce que l'extrémité supérieure du ressort (8) est introduite dans la fente (12) et s'appuie sur la bille (10).

6. Dispositif selon l'une quelconque des revendications précédentes, caractérisé en ce qu'il comporte au moins un de ces sièges (11) situé dans une position centrale sur la face intérieure du couvercle (4), une portion radiale (20) définie à l'extrémité supérieure du ressort, (8) étant logée dans ce siège situé en position centrale.

7. Dispositif selon l'une quelconque des revendications 1 à 5, caractérisé en ce qu'il comporte une multiplicité de ces paires de bossages (11) disposés en vis-à-vis, situées sur une zone circonférentielle et adaptées pour coopérer en des points équidistants avec l'extrémité supérieure du ressort (8).

8. Dispositif selon l'une quelconque des revendications précédentes, caractérisé en ce que ce couvercle (4) comporte sur sa face extérieure un évidement (40) vers le haut duquel s'ouvre les passages (13), cet évidement (40) pouvant être fermé par une plaque de fermeture (41) adaptée pour être scellée par le fabricant, une mise à air libre (42) étant églaement prévue.

0019 854

Fig.1

Fig.2

Fig.3

Fig.4

Fig.5

Fig.6